# EUROPEAN PATENT APPLICATION

(11) **EP 2 178 239 A2**
(43) Date of publication of application: **21.04.2010**
(21) Application number: 09171105.1
(22) Date of filing: 23.09.2009
(51) Int. Cl.: H04L 1/18

(54) **Retransmission data generating apparatus and receiver**

(30) Priority: 20.10.2008 CN 200810169705
(71) Applicant: FUJITSU LIMITED, Kawasaki-shi, Kanagawa 211-8588 (JP)
(72) Inventor: Zhang, Yuantao, 100025, Beijing (CN); Wu, Jianming, Kawasaki-shi Kanagawa 211-8588 (JP); Tian, Jun, 100025, Beijing (CN); Zhou, Hua, 100025, Beijing (CN); Xue, Jinyin, 100025, Beijing (CN)
(74) Representative: Wilding, Frances Ward

(57) **Abstract**

This invention proposes a transmission data generating apparatus for use in a transmitter of a communication system, which transmission data generating apparatus comprises a redundancy data obtaining unit for obtaining redundancy data of information data which was transmitted to a receiver and was not received successfully by the receiver; a new data obtaining unit, for extracting new data, which has not been transmitted to the receiver; and a combination unit, for combining the redundancy data and the new data to form a transmission data to be subsequently transmitted to the receiver. This invention enhances the success rate of decoding the new data in primarily transmitted data and retransmitted data, and enhances system throughput.

## Description

### Field of the Invention

The present invention relates to the transmission technology in communications systems, and the present invention relates to data retransmitting method and apparatus of a transmitter and data processing method and apparatus of a receiver in the technique of hybrid automatic retransmission request (abbreviated as HARQ) based on incremental redundancy.

### Background of the Related Art

Due to influences of transmission environment, noises and interferences on signal transmission in radio communication, the process of receiving and processing signals is usually not completed for once at the receiving terminal. In other words, there is certain probability of decoding errors. It is then necessary for the transmitting terminal to retransmit the data. Hybrid automatic retransmission request (HARQ) is a commonly employed technique for error detection of non-real time data transmission. This technique combines the two techniques of automatic retransmission request (abbreviated as ARQ) and forward error coding (abbreviated as FEC) to enable the receiving terminal to decode the received data and subsequently send a response signal to the transmitting terminal in accordance with the result of cyclical redundancy check (abbreviated as CRC) - if the CRC is correct, a positive response signal ACK is sent; if the CRC is erroneous, a negative response signal NAK is sent. The received data may be stored to merge with the data retransmitted from the transmitting terminal, and the merged signal is decoded until the decoding is successful or the maximum retransmission number is reached.

The HARQ technique mainly includes the following three types according to different contents as retransmitted:

HARQ-I: the receiving terminal directly discards the erroneously decoded packet and feeds back a NAK signal, and the transmitting terminal retransmits a packet identical with the primarily transmitted data upon reception of the NAK signal; there is no combination decoding in HARQ-I.

HARQ-II: this is an incremental redundancy (abbreviated as IR) technique, in which the erroneous packet is not discarded, whereas the receiving terminal stores the erroneously decoded data, and the data is merged with retransmitted redundancy information for subsequent decoding. Carrying only the redundancy information therewith, the retransmitted data is different from the primarily transmitted data in contents, and the retransmitted data itself cannot be decoded.

HARQ-III: the erroneous packet is not discarded in this technique, whereas the receiving terminal stores the erroneously decoded data, and the data is merged with retransmitted data for subsequent decoding; the retransmitted data itself can be decoded, and the retransmitted data can be either identical with or different from the primarily transmitted data both in format and content.

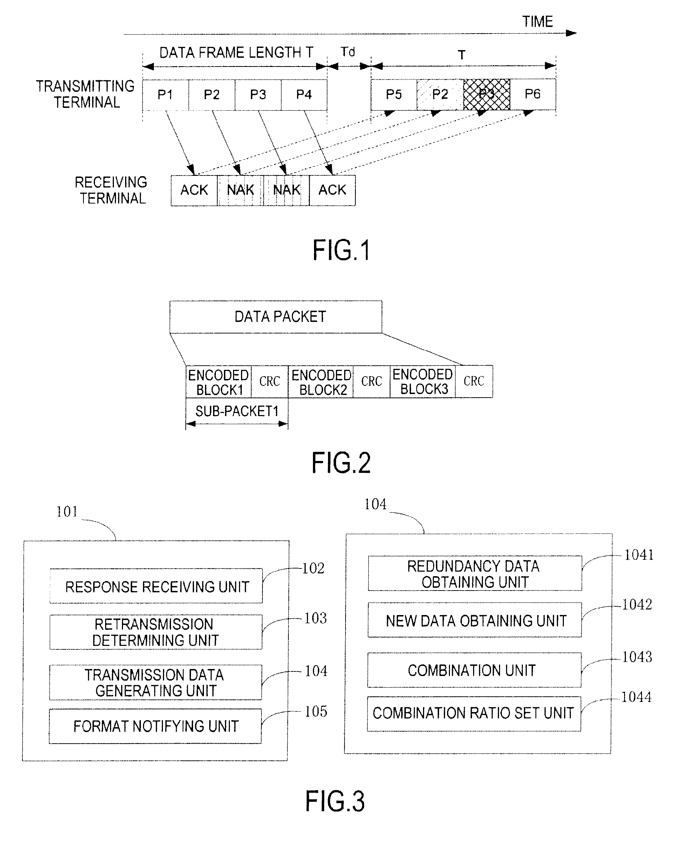

Fig. 1 schematically illustrates HARQ data frames and time sequence of retransmission. Each data frame includes a plurality of data packets (four as exemplified in Fig. 1) as schematically shown in Fig. 1. The receiving terminal (the part of the receiver) feeds back one CRC result for each data packet to the transmitting terminal (the part of the transmitter). As schematically shown in Fig. 1, of the four data packets P1, P2, P3 and P4 that are initially transmitted, it is learnt from CRCs, for example, that P1 and P4 are correctly received, so that the feedback for them are ACK, but that P2 and P3 are not correctly received, so that the feedbacks for them are NAK. Accordingly, as shown in Fig. 1, the data packets P2 and P3 are retransmitted in the next frame, while other positions in the frame can be used to transmit new data packets (new data packets P5 and P6 as shown in Fig. 1). T as shown in Fig. 1 is the length of the data frame, and Td is the inter-frame space.

In a normal HARQ system, when the receiving terminal detects an erroneous data packet, it is usual for the erroneous bits to occupy only a part of the data packet, and retransmission of the entire data packet will therefore lead to certain loss of the throughput. Both the long-term evolution (LTE) of 3GPP and the WiMAX system enhanced type (802.16m) take HARQ-II and III as standby solutions. When the first attempt to decode fails, the transmitter retransmits after adding the redundancy information or after reprocessing, and the retransmitted packet is not completely the same as the originally transmitted packet. Merging of the retransmission information with the previously received data packet can obtain better system throughput.

In the normal HARQ retransmission mechanism, the data packet is performed with CRC as a whole at the receiving terminal, but it is probable in the actual system that only the minority of bits of the data packet are erroneous, and retransmission of the entire (or partial) packet will thus occupy a great deal of channel resources. In order to further enhance the performance of HARQ, a method has been proposed to be based on encoded block for retransmission. In this method, each data packet consists of a plurality of encoded blocks each having a check code of its own, and data retransmission takes the encoded block as the smallest unit.

Fig. 2 is a schematic view schematically illustrating the structure of a data packet according to the technical solution of encoded block retransmission. The structure of the data packet as shown in Fig. 2 is merely exemplary in nature, as the data packet may include much more or less encoded blocks. As shown in Fig. 2, the data packet (also referred to as transport block, TB) in the frame includes several (three as schematically shown in Fig. 2) encoded blocks each carrying therewith a CRC code. After a source data sub-packet passes through an encoder, corresponding thereto is a combination of one encoded block with a CRC code. A CRC code can be either added or not added to the entire data packet at the end of the packet. The receiving terminal checks each encoded block, and if there is anything erroneous, only the erroneous encoded block(s) is retransmitted in the next packet of data, while new data can be put in the other encoded blocks, thus avoiding the problem existent in the normal HARQ technique of having to retransmit the entire data packet.

In the technical solution based on encoded block retransmission, the encoded block replaces the entire data packet as the smallest unit for retransmission, and the system throughput is enhanced thereby. However, in order to enhance encoding gain in the modern communications system, it is usual to select a long encoded block, for instance in the long-term evolution LTE of 3GPP, the encoded block reaches up to 6144 bits to the maximum, and this means that the load of retransmission is still very great.

As should be noted, the foregoing description of the conventional technology is merely meant to facilitate clear and complete description of the technical solution of the present invention, and to facilitate comprehension by those skilled in the art. These technical solutions should not be regarded as publicly known to those skilled in the art only because they are described in the Background of the Related Art of the present invention.

Reference documents relevant to the present invention are listed below, and are herein incorporated by reference, as if they were described in detail in the Description.
1. [Patent Document 1]: Wu, et al., Adaptive multi-mode HARQ system and method (US 7,152,196 B2);
2. [Patent Document 2]: Stewart, et al., Block puncturing for turbo code based incremental redundancy (US 20070061690 A1);
3. [Patent Document 3]: J. Wu, "Grouped Packet Encoding Based H-ARQ Using Iterative Decoding", Fujitsu Patent, April 16, 2008, Patent# 08-51201;
4. [Patent Document 4]: Jinyin Xue et al., "Automatic Retransmission Controller and Retransmission Block Recombining Apparatus", Chinese Patent Application No. 200810127487.4;
5. [Non-Patent Document 1]: 3GPP TR25.835. Report on hybrid ARQ type II/III [S].2000;
6. [Non-Patent Document 2]: C. Bai, B. Mielczarek, W. A. Krzymie'n, and I. J. Fair, "Sub-block recovery scheme for iterative decoding of turbo codes," in Proc. IEEE VTC'05-Fall, Dallas, USA, Sept. 2005; and
7. [Non-Patent Document 3] : Tao Shi; Lei Cao, "Combining techniques and segment selective repeat on turbo coded hybrid ARQ", in Proc. IEEE Conf. WCNC. 2004 IEEE, Vol.4, pp. 2115-2119, 21-25 March 2004.

### Summary of the Invention

The present invention is proposed in view of the current circumstances of the prior art to overcome or at least mitigate one or more deficiencies existent in the prior art, or to provide at least one advantageous choice.
The invention is defined in the independent claims, to which reference should now be made. Advantageous embodiments are set out in the sub claims.

To achieve the above objectives, the present application provides the following embodiments of invention aspects.

In an embodiment of a first aspect of the invention there is provided a transmission data generating apparatus for use in a transmitter of a communication system, which transmission data generating apparatus comprises a redundancy data obtaining unit for obtaining redundancy data of information data which was transmitted to a receiver but was not received successfully by the receiver; a new data obtaining unit, for extracting new data which has not been transmitted to the receiver; and a combination unit, for combining the redundancy data and the new data to form a transmission data to be subsequently transmitted to the receiver.

In comparison with the traditional mode of incremental redundancy, the transmission data generating scheme employed by this transmission data generating apparatus has the advantages of reducing the size of the retransmission check segment, enhancing throughput of the system, and encoding and transmitting the retransmission check segment together with the new data to thereby enhance reliability of the retransmission check segment.

Preferably, the transmission data generating apparatus further comprises a combination ratio set unit, for setting a ratio relationship between the redundancy data and the new data.

In an embodiment of a second aspect of the invention there is provided a receiver, including: a control information obtaining unit, for obtaining combination control information; a redundancy data obtaining unit, for obtaining, from retransmitted data, a retransmission redundancy data which relates to primarily transmitted data, in accordance with the combination control information; a data merging unit, for merging the retransmission redundancy data with the primarily transmitted data, to acquire merged primarily transmitted data; and a decoding unit, for decoding the merged primarily transmitted data, wherein the receiver further comprises a redundancy data processing unit, for obtaining, after the decoding unit has correctly decoded the merged primarily transmitted data, a correct redundancy data corresponding to the retransmission redundancy data, in accordance with the decoded correct primarily transmitted data, and for processing the correct redundancy data; and wherein the data merging unit is further used for merging the processed correct redundancy data with the retransmitted data, to acquire merged retransmitted data; and the decoding unit further decodes the merged retransmitted data.

Advantages of this mode rest in the fact that the primarily transmitted data can be decoded by using the retransmitted data, thus enhancing precision of decoding the primarily transmitted data, and that the correctly decoded primarily transmitted data helps in turn decode the retransmitted data, thus enhancing precision of decoding the new data transmitted in the retransmitted data.

Preferably the decoding unit further decodes the retransmitted data when the decoding unit has not correctly decoded the merged primarily transmitted data; the redundancy data processing unit is used for obtaining, after the decoding unit has correctly decoded the retransmitted data, correct retransmission redundancy data, in accordance with the decoded correct retransmitted data, and for processing the correct retransmission redundancy data; the data merging unit merges the processed retransmission redundancy data with the primarily transmitted data, to reacquire the merged primarily transmitted data; and the decoding unit decodes the merged primarily transmitted data as re-obtained.

Advantage of this mode rests in the fact that erroneously decoded primarily transmitted data can be re-decoded by using the redundancy data information corresponding to the primarily transmitted data as obtained after the retransmitted data has been successfully decoded, thus enhancing precision of decoding the primarily transmitted data.

Preferably the redundancy data processing unit obtains the correct redundancy data in such a manner as to perform mother encoding on information data in the primarily transmitted data obtained via decoding, to acquire correct check information, and then to extract from the check information a corresponding segment that corresponds to the retransmission redundancy data.

Advantageously the redundancy data processing unit so processes the correct redundancy data as to expand the value of each bit of the correct redundancy data to a corresponding large value in accordance with the value being positive or negative.

Preferably the retransmission redundancy data in the retransmitted data can be not completely identical (for example it may be substantially identical or at least partially identical) with the redundancy data in the primarily transmitted data.

In an embodiment of a third aspect of the invention there is provided a receiver, including: a control information obtaining unit, for obtaining combination control information; a redundancy data obtaining unit, for obtaining, from retransmitted data, a retransmission redundancy data which relates to primarily transmitted data, in accordance with the combination control information; and a decoding unit, for decoding the retransmitted data; wherein the receiver further including a redundancy data processing unit, for obtaining, after the decoding unit has correctly decoded the retransmitted data, a correct redundancy data corresponding to the retransmission redundancy data in the retransmitted data in accordance with the decoded correct retransmitted data and based on the combination control information, and for processing the correct redundancy data; and a data merging unit, for merging the processed correct redundancy data with the primarily transmitted data, to acquire merged primarily transmitted data, and wherein the decoding unit is further used to decode the merged primarily transmitted data.

This embodiment differs from the embodiments of the second aspect in the fact that it firstly decodes the retransmitted data as received, and precision of decoding the primarily transmitted data can then be enhanced by the redundancy data corresponding to the primarily transmitted data in the correctly decoded retransmitted data.

Preferably, when the decoding unit has not correctly decoded the retransmitted data, the data merging unit merges the retransmission redundancy data with the primarily transmitted data, to acquire merged primarily transmitted data; the decoding unit decodes the merged primarily transmitted data; the redundancy data processing unit is used for obtaining, after the decoding unit has correctly decoded the merged primarily transmitted data, a correct redundancy data corresponding to the retransmission redundancy data in the retransmitted data, in accordance with the decoded primarily transmitted data and based on the combination control information, and for processing the correct redundancy data corresponding to the retransmission redundancy data; and the data merging unit is used for merging the processed correct redundancy data corresponding to the retransmission redundancy data with the retransmitted data, to acquire merged retransmitted data, wherein the decoding unit is further used for decoding the merged retransmitted data.

Advantages of this mode rest in the fact that the primarily transmitted data can be decoded by using the retransmitted data, thus enhancing precision of decoding the primarily transmitted data, and that the correctly decoded primarily transmitted data helps in turn decode the retransmitted data which has been erroneously decoded, thus enhancing precision of decoding the new data transmitted in the retransmitted data.

Preferably the retransmission redundancy data in the retransmitted data can be not completely identical with check information in the primarily transmitted data.

In an embodiment of a fourth aspect of the invention there is provided a method of receiving retransmission data, including: obtaining combination control information; obtaining check information corresponding to primarily transmitted data in retransmitted data, in accordance with the combination control information; merging the check information corresponding to the primarily transmitted data in the retransmitted data with the primarily transmitted data, to acquire the merged primarily transmitted data; and decoding the merged primarily transmitted data; wherein the method further including: obtaining, after the merged primarily transmitted data has been correctly decoded, correct redundancy data that corresponds to the check information corresponding to the primarily transmitted data in the retransmitted data, in accordance with the decoded correct primarily transmitted data; merging the correct redundancy data with the retransmitted data, to acquire the merged retransmitted data; and decoding the merged retransmitted data.

In an embodiment of a fifth aspect of the invention there is provided a method of receiving retransmission data, including: obtaining combination control information; obtaining check information corresponding to primarily transmitted data in retransmitted data, in accordance with the combination control information; decoding the retransmitted data; wherein the method further including: obtaining, after the retransmitted data has been correctly decoded, correct redundancy data that corresponds to the check information corresponding to the primarily transmitted data in the retransmitted data, in accordance with the decoded correct retransmitted data and based on the combination control information; merging the correct redundancy data with the primarily transmitted data, to acquire the merged primarily transmitted data; and decoding the merged primarily transmitted data.

Invention embodiments also include a transmitter which comprises the transmission data generating apparatus as previously described.

Preferably, the transmitter further comprises a response receiving unit, for receiving information fed back from a receiver; and a retransmission determining unit, for determining an encoded data block to be retransmitted, in accordance with the information received by the response receiving unit; wherein the data combination unit processes according to the partial data to be retransmitted as determined by the retransmission determining unit.

Preferably, the transmitter further includes a format notifying unit, for notifying the receiver of combination control information.

In one computer program embodiment there is provided computer software (a computer program) which, when executed by a computer or executed after being explained or compiled by a computer, enables the computer to realize the function of the transmitter or the transmission data generating apparatus described above.

In a further computer program embodiment there is provided computer software, when executed by a computer or executed after being explained or compiled by a computer, enabling the computer to realize the method for receiving retransmission data described above.

In a further computer program embodiment there is provided computer-readable storage medium, storing thereon the computer software described above.

The computer-readable storage medium according to Aspect 18 can for instance be a floppy disk, a hard disk, an optical disk, a magnetically optical disk, a compact read-only memory (CD-ROM), a compact writable memory (CD-R), a digital versatile disk read-only memory (DVD-ROM), a DVD-RAM, a magnetic tape, a nonvolatile memory card, an ROM card, and any of various recording media, whereon is recordable a program code transmitted over a network (for instance, email or personal computer communication [namely communication line]).

These and further aspects and characteristics of the present invention will become more apparent from descriptions and drawings below. Embodiments of the present invention are disclosed in detail and modes to which the principles of the present invention can applied are indicated in the following descriptions and drawings. As should be understood, the present invention shall not be restricted in scope thereby, as the present invention subsumes various variations, modifications and equalities within the spirits and provisos defined in the attached claims.

The feature described and/or illustrated with respect to one embodiment can be employed in one or more other embodiments in the same or a similar mode, to combine with features of other embodiments, or to replace features of other embodiments.

As should be stressed, the term of "comprising/including" when used in this paper indicates the existence of a feature, an integral, a step or a component part, but does not exclude the existence or addition of one or more other features, integral, steps or component parts.

Many aspects of the present invention can be better comprehended with reference to the following accompanying drawings. Component parts in the accompanying drawings are not drawn in proportion, as they are exemplified merely to illustrate the principles of the present invention. To facilitate illustration or description of certain sections of the present invention, the corresponding sections in the drawings may be enlarged, i.e. be sized bigger than other component parts in an exemplary apparatus made in actual fabrication according to the present invention. Elements and features illustrated/described in one figure or one embodiment of the present invention can be combined with elements and features illustrated/described in one or more other figures or embodiments. In addition, similar reference numerals represent corresponding component parts in several figures, and indicate corresponding component parts used in more than one embodiment.

### Brief Description of the Drawings

The accompanying drawings illustrate preferred embodiments of the present invention, make up a part of the Description, and enunciate in greater detail the principles, features and characteristics of the present invention together with the literal descriptions. In the drawings:
Fig. 1 is a schematic view schematically illustrating the data frames and the time sequence of retransmission of a normal HARQ system;
Fig. 2 is a schematic view schematically illustrating the structure of a data packet according to the technical solution of encoded block retransmission;
Fig. 3 is a block diagram showing the data retransmission controller at the transmitter end according to the present invention;
Fig. 4 is a block diagram showing the data reception controller at the receiver end according to the present invention;
Fig. 5 is view showing a scheme of data combination at the transmitter end according to the present invention;
Fig. 6 is view showing another scheme of data combination at the transmitter end according to the present invention;
Fig. 7 is view showing a scheme of data merging at the receiver end according to the present invention;
Fig. 8 is view showing another scheme of data merging at the receiver end according to the present invention;
Fig. 9 is a view showing the flow of data transmission at the transmitter end according to the present invention;
Fig. 10 is a view showing the flow of data reception at the receiver end according to the present invention; and
Fig. 11 is a view showing another flow of data reception at the receiver end according to the present invention.

### Specific Embodiments for Carrying Out the Invention

The method and apparatus according to embodiments of the present invention is to be described below with reference to the drawings and taking a normal single-antenna communications system for example. As should be noted, however, the present invention is not only applicable to the single-antenna communications system, but also to the multi-antenna system of MIMO-OFDM or CDMA system. The present invention is also applicable to the general Internet data retransmission.

Fig. 3 schematically illustrates the structure of the data retransmission controller at the transmitter end. As shown in Fig. 3, the data retransmission controller 101 comprises a response receiving unit 102, a retransmission determining unit 103, a transmission data generating unit 104, and a format notifying unit 105. The transmission data generating unit 104 includes a redundancy data obtaining unit 1041, a new data obtaining unit 1042, and a combining unit 1043. Alternatively, the transmission data generating unit 104 can further include a combination ratio set unit 1044.

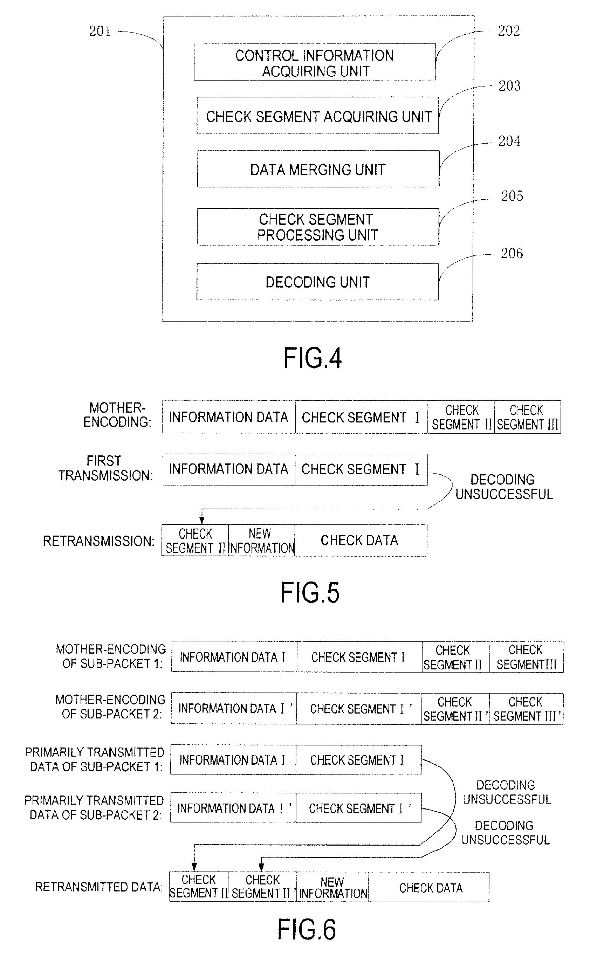

Fig. 4 schematically illustrates the structure of the data processing controller at the receiving terminal. As shown in Fig. 4, the data processing controller 201 comprises a control information obtaining unit 202, a check segment selecting unit 203, a data merging unit 204, a check segment processing unit 205, and a decoding unit 206.

Fig. 5 schematically illustrates a scheme of data combination at the transmitting terminal according to an embodiment of the present invention. As shown in Fig. 5, at the transmitting terminal, the mother-encoded data of each sub-packet in the protocol data unit (PDU) consists of information data and check data, wherein the check data is schematically divided into a plurality of check segments, respectively as check segment I, check segment II and check segment III. The check data is for instance Turbo encoded parity check bit, and is also referred to as redundancy data in this paper. The actually transmitted data is obtained by puncturing the mother-encoded data, that is to say, only partial check data is transmitted in accordance with the encoding rate. Schematically, check segment I is employed in Fig. 5. The information data and check segment I as exemplified in Fig. 5 are also referred to as primarily transmitted data in this paper. If the firstly transmitted encoded data fails to be decoded at the receiving terminal, the transmitter retransmits the data, and the data retransmitted consists of check segment II and new information data. The check segment II can be identical with the primarily transmitted check segment (for instance check segment I), but preferably different from (not completely identical with) the primarily transmitted check segment. More preferably, the check segment II is completely different from the primarily transmitted check segment. As should be noted, in embodiments of the present invention, although the new information data and check segment II transmitted by the transmitter may have never been previously transmitted, in order to differentiate from the data previously transmitted but not correctly received or decoded by the receiver, the data is still called retransmitted data according to context. Likewise according to context, in order to differentiate from the check segment in the primarily transmitted data, the check segment (for instance check segment II) in the retransmitted data is still called retransmitted check segment or retransmitted redundancy data regardless of whether it has been previously transmitted to the receiver or not.

Fig. 6 schematically illustrates another scheme of data combination at the transmitting terminal according to an embodiment of the present invention. As shown in Fig. 6, at the transmitting terminal, the mother-encoded data of two sub-packets in the PDU each consists of information data and check data, of which the check data is schematically divided into a plurality of check segments, wherein the mother-encoded check information of sub-packet 1 is divided into check segment I, check segment II and check segment III, and the mother-encoded check information of sub-packet 2 is divided into check segment I', check segment II' and check segment III'. The data actually transmitted by each sub-packet is obtained by puncturing the mother-encoded data, that is to say, only partial check bits are transmitted in accordance with the encoding rate. Schematically, the two sub-packets both employ the first check segments after encoding, that is to say, the sub-packet 1 employs the check segment I after encoding, and the sub-packet 2 employs check segment I' after encoding. If the encoded data firstly transmitted by the two sub-packets fails to be decoded at the receiving terminal, the transmitting terminal retransmits the data, and the data retransmitted consists of check segment II (retransmitted check segment of the primarily transmitted data), check segment II' (retransmitted check segment of the primarily transmitted data) and new encoded information data.

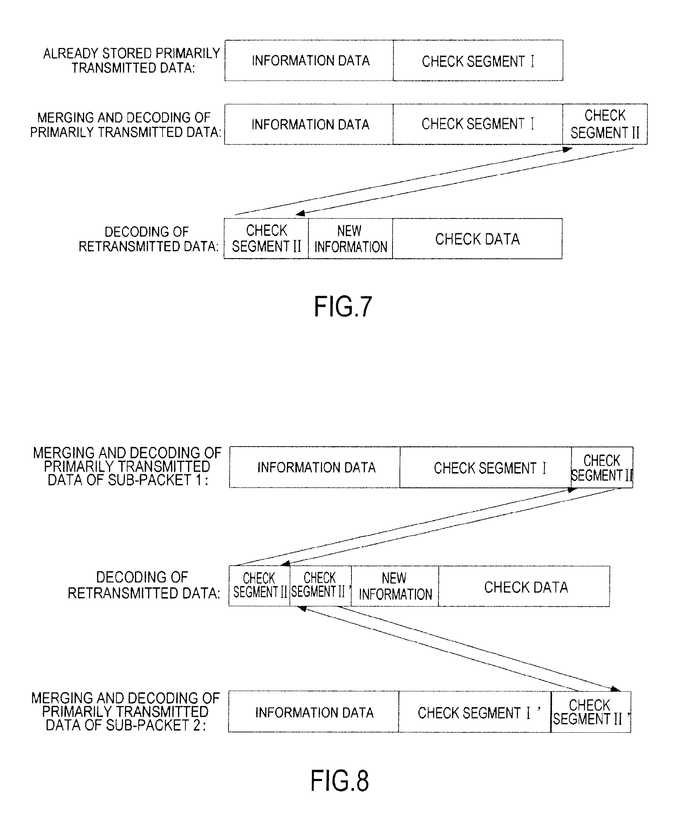

Fig. 7 schematically illustrates a scheme of data merging at the receiving terminal according to an embodiment of the present invention. This merging scheme corresponds to the data transmitting scheme in Fig. 5. As shown in Fig. 7, the soft information of the unsuccessfully decoded primarily transmitted data is stored in a cache at the receiving terminal. On reception of the retransmitted data, it is possible to extract, from the retransmitted data, the check segment II that corresponds to the primarily transmitted data, and merge it with the primarily transmitted data to help decode the primarily transmitted data. In turn, it is also possible to obtain the value of the check segment II in accordance with the correctly decoded primarily transmitted data, process the value and make a soft information mergence of the processed value with the check segment II of the retransmitted data to help decode the retransmitted data.

Fig. 8 schematically illustrates another scheme of data merging at the receiving terminal according to an embodiment of the present invention. This merging scheme corresponds to the data transmitting scheme in Fig. 6. As shown in Fig. 8, on reception of the retransmitted data at the receiving terminal, it is possible to respectively extract the check segment II and the check segment II' that correspond to the primarily transmitted sub-packets 1 and 2 from the retransmitted data, and respectively merge them with the primarily transmitted data of the received sub-packet 1 and the primarily transmitted data of the received sub-packet 2 to help decode the primarily transmitted sub-packets 1 and 2. In turn, it is also possible to respectively obtain the values of the check segment II and the check segment II' in accordance with the correctly decoded primarily transmitted data, process them and make a soft information mergence of the processed value with the check segment II and the check segment II' of the retransmitted data to help decode the retransmitted data.

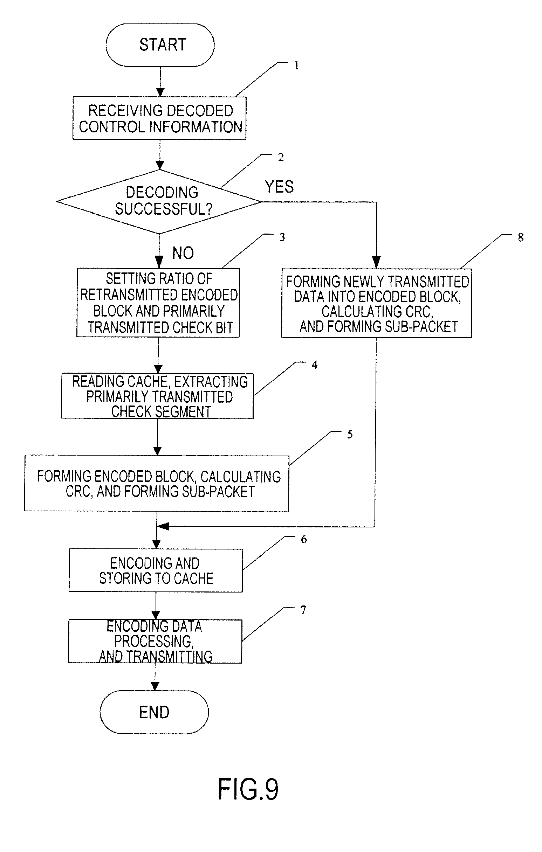

Fig. 9 schematically illustrates the flow of data transmission according to an embodiment of the present invention. As shown in Fig. 9, firstly in Step 1, the response receiving unit 102 in the data retransmission controller 101 of the transmitter receives decoding response information fed back from the receiver. Then in Step 2, the retransmission determining unit 103 determines whether the primarily transmitted data has been correctly decoded according to the decoding response information received by the response receiving unit 102. If decoding is successful (YES in Step 2), Step 8 is performed, in which new data is prepared for transmission, for instance, by combining the new data into encoded blocks, calculating the CRC, and combining into sub-packets, etc. Step 6 is subsequently performed, in which the sub-packets are encoded, and the encoded data is then stored in the cache.

If the decoding is erroneous (NO in Step 2), Step 3 is performed, in which the combination ratio set unit 1044 in the transmission data generating unit 104 sets the ratio of the retransmitted check segment in the retransmitted sub-packet, and calculates the size of the check segment of the primarily transmitted data in the actual retransmitted sub-packet. The process then goes to Step 4. As should be noted, the ratio of the retransmitted check segment of the primarily transmitted data in the retransmitted sub-packet or the size of the retransmitted check segment of the primarily transmitted data can be predetermined, that is to say, Step 3 can be omitted.

In Step 4, the redundancy data obtaining unit 1041 of the transmission data generating unit 104 reads the cache of the transmitter, and reads the check segment (for instance check segment II) of the primarily transmitted data sized identical with the size obtained in Step 3 or the predetermined size as the retransmitted check segment of the primarily transmitted data. The process then goes to Step 5.

In Step 5, the new data obtaining unit 1042 obtains new data, and the combination unit 1043 in the transmission data generating unit 104 combines the check segment obtained by the redundancy data obtaining unit 1041 in Step 4 with the new data obtained by the new data obtaining unit 1042 into an encoded block, and calculates to obtain the cyclic redundancy check CRC information to be combined with the encoded block into a sub-packet. Then in Step 6, the sub-packet is encoded, and the encoded data is stored in the cache. Finally in Step 7, the encoded data is processed and then transmitted. Under certain circumstances, the format notifying unit 105 further transmits the corresponding format information in Step 7. The format information can indicate the size and position of the retransmitted check segment in the sub-packet. Alternatively, the format information can indicate the ratio between the retransmitted check segment and the new data, the fields of the sub-packet, and the size and position of each field, etc. In the case the format information has been agreed upon between the transmitting terminal and the receiving terminal, the format notifying unit 105 can be omitted.

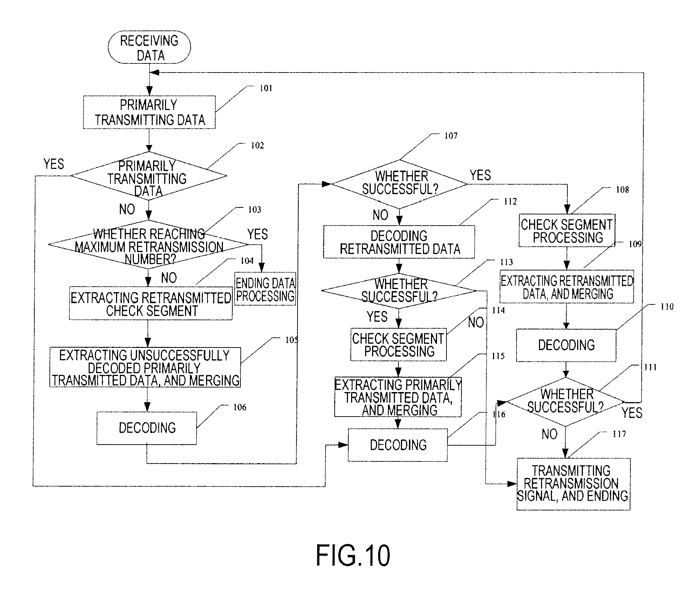

Fig. 10 is a flowchart schematically illustrating retransmission data reception according to an embodiment of the present invention. The flowchart of retransmission data reception in Fig. 10 is directed to the data merging scheme at the receiver in Fig. 7. The flow firstly helps decode the primarily transmitted data as unsuccessfully received, in accordance with the information in the retransmitted data that corresponds to the primarily transmitted data, and then helps decode the retransmitted data in accordance with the successfully decoded primarily transmitted data. The flow comprises the following steps.

Step 101: the receiver receives the data and the control information (if any) from the transmitter. The control information is the retransmission information ratio, and/or the initial position of each section of the retransmitted data, etc. The control information is also referred to as combination control information in this paper. The control information obtaining unit 202 in the data reception controller 201 receives the control information or obtains control information prestored in the memory of the receiver.

Step 102: the control information obtaining unit 202 in the receiver determines whether the received data is the primarily transmitted data. If not (NO in Step 102), the process goes to Step 103, otherwise (YES in Step 102) the process goes to Step 106.

Step 103: the control information obtaining unit 202 in the receiver determines whether the maximum retransmission number has been reached. If YES, data processing is completed, otherwise the process goes to Step 104.

Step 104: the check segment selecting unit 203 extracts the check segment II in the retransmitted data that corresponds to the primarily transmitted data; the check data can be obtained in accordance with control information received in Step 101 such as the size and position of the check segment II in the retransmitted data.

Step 105: the data merging unit 204 extracts the primarily transmitted data as unsuccessfully decoded from the cache, and merges it with the check segment, that is to say, the soft information corresponding to the check segment II in the received retransmitted data is attached after the already existent check segment I (also referred to as primarily transmitted data check segment) in the primarily transmitted data.

Step 106: the decoding unit 206 decodes the merged data.

Step 107: the decoding unit 206 determines whether the decoding is successful. If the decoding is successful (YES in Step 107), the process goes to Step 108, otherwise (NO in Step 107) the process goes to Step 112.

Step 108: when the primarily transmitted data has been successfully decoded, the check segment processing unit 205 processes the retransmitted check segment (for instance check segment II). The processing mainly includes mother-encoding again the information data obtained by decoding, and extracting the check segment II in the corresponding retransmitted encoded block having been mother-encoded to change it bit-by-bit into a maximum value in accordance with whether the value of the bit is positive or negative (positive-to-negative relationship), for instance, by changing +1 into +100 or -1 into -100. The reason for performing such a process is because when the receiver decodes, what is input into the decoder is the soft information of each bit of the received data, and a greater absolute value of the soft information indicates higher reliability of the bit. The value of soft information of each bit of the check segment can be increased after such a process, and decoding precision is thereby enhanced.

Steps 109 and 110: in Step 109, the data merging unit 204 merges the processed check segment II to its corresponding position in the retransmitted data, that is to say, soft information addition of the processed check segment II and the check segment II of the retransmitted data as received is performed, and then in Step 110, the decoding unit 206 decodes the retransmitted data. As should be noted, although the expression of retransmitted data is used in this context, this retransmitted data includes new data as previously mentioned, and purpose of decoding in this step is precisely to correctly decode the new data.

Step 111: the decoding unit 206 determines whether the decoding is successful. If it is determined that the decoding is successful, the process goes to Step 101, in which the receiver begins to receive new data; if it is determined that the decoding is unsuccessful, the process goes to Step 117, in which a retransmission request signal is sent, and the process ends.

Step 112: the decoding unit 206 decodes the retransmitted data.

Step 113: the decoding unit 206 determines whether the decoding is successful. If the decoding is successful, the process goes to Step 114, otherwise the process goes to Step 117.

Step 114: the check segment processing unit 205 processes the check segment II in the retransmitted data that corresponds to the primarily transmitted data, that is to say, it is changed into the maximum value in accordance with the positiveness or negativeness of each bit as previously mentioned.

Step 115: the data merging unit 204 extracts the primarily transmitted data, and merges the check segment II of the primarily transmitted data as obtained in Step 113 with the primarily transmitted data.

Step 116: the decoding unit 206 decodes the primarily transmitted data, and then goes to Step 111 to determine whether the decoding is successful. If the decoding is successful, the process goes to Step 1 to begin to receive new data, otherwise the process goes to Step 117.

Step 117: the decoding fails, a retransmission request signal is transmitted, and the process ends.

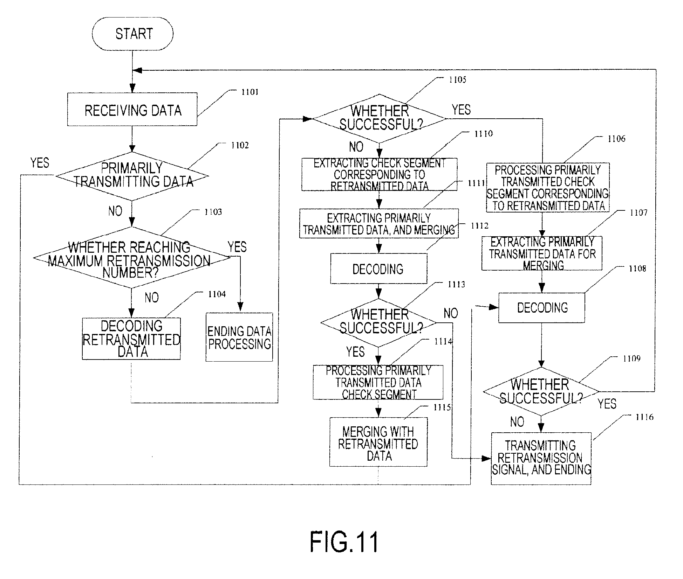

Fig. 11 schematically illustrates another data reception flow according to an embodiment of the present invention. The flow firstly decodes the retransmitted data, and then helps decode the primarily transmitted as unsuccessfully received, in accordance with the correctly decoded retransmitted data.

The flow includes the following steps.

Step 1101: the receiver receives the data and the control information (if any) from the transmitter. The control information includes the retransmission information ratio, and the initial position of each section of the retransmitted data, etc. The control information obtaining unit 202 in the data reception controller 201 receives the control information or obtains control information prestored in the memory of the receiver.

Step 1102: the control information obtaining unit 202 in the receiver determines whether the received data is the primarily transmitted data. If not, the process goes to Step 1103, otherwise the process goes to Step 1108.

Step 1103: the control information obtaining unit 202 in the receiver determines whether the maximum retransmission number has been reached. If YES, the data processing completes, and otherwise the process goes to Step 1104.

Step 1104: the decoding unit 206 decodes the retransmitted data.

Step 1105: the decoding unit 206 determines whether the decoding is successful. If the decoding is successful, the process goes to Step 1106, otherwise the process goes to Step 1110.

Step 1106: the check segment processing unit 205 processes the retransmitted check segment (for instance the check segment II); the processing mainly includes mother-encoding the retransmitted data again, extracting the check segment II in the corresponding retransmitted encoded block having been mother-encoded, and changing it bit-by-bit into the corresponding maximum value according to its positiveness or negativeness, for instance, by changing it from +1 to +100 or from -1 to -100.

Step 1107: the data merging unit 204 extracts from the cache the primarily transmitted data as unsuccessfully decoded, and merges it with the check segment, that is to say, the check segment that corresponds to the primarily transmitted data in the retransmitted data as received is attached after the check segment I of the primarily transmitted data.

Step 1108: the decoding unit 206 decodes the primarily transmitted data or the merged data.

Step 1109: the decoding unit 206 determines whether the decoding is successful. If the decoding is successful, the process goes to Step 1101 to receive new data, otherwise the process goes to Step 1116, in which a retransmission request signal is transmitted, and the process ends.

Step 1110: the check segment selecting unit 203 extracts the check segment II that corresponds to the primarily transmitted data in the retransmitted data; the check data can be obtained in accordance with the control information received as in Step 1101, such as the size and position of the check segment II in the retransmitted data.

Step 1111: the data merging unit 204 merges the check segment II with the primarily transmitted data.

Step 1112: the decoding unit 206 decodes the merged data.

Step 1113: the decoding unit 206 determines whether the decoding is successful. If it is determined that the decoding is successful, the process goes to Step 1114, and if it is determined that the decoding is unsuccessful, the process goes to Step 1116, in which a retransmission signal is transmitted, and the process ends.

Step 1114: the check segment processing unit 205 obtains the correct check segment II in accordance with the information data in the correctly decoded primarily transmitted data and processes the segment, that is to say, it is changed bit-by-bit into the corresponding maximum value in accordance with the positiveness or negativeness as previously mentioned.

Step 1115: the data merging unit 204 extracts the retransmitted data, and merges the check segment II of the processed primarily transmitted data as obtained in Step 1114 with the retransmitted data as received, that is to say, the processed check segment II is added with the soft information of the check segment II in the retransmitted data; the process then goes to Step 1108 to perform decoding.

The data merging scheme at the receiver as shown in Fig. 8 can also be easily performed according to the principles of the flows shown in Figs. 10 and 11.

The technical solution of embodiments of the present invention is applicable to both the TDD system and the FDD system. In the TDD system, the signaling and the data can be sent at different timings of a downlink time period. In the FDD system, the signaling is sent over a dedicated frequency band and simultaneously with the data.

The apparatus and component parts thereof and the methods of embodiments of the present invention can be realized by hardware or by software, and can also be realized by the combination of hardware with software.

Although the present invention has been completely and clearly described with regard to the specific embodiments, the attached claims are not restricted thereby, and should instead be explained as all alternative embodiments and modified embodiments in line with the basic principles enunciated above and realizable by those skilled in the art.

## Claims

1. A transmission data generating apparatus for use in a transmitter of a communication system, the transmission data generating apparatus comprising:
a redundancy data obtaining unit for obtaining redundancy data of information data which was transmitted to a receiver and was not received successfully by the receiver;
a new data obtaining unit, for obtaining new data which has not been transmitted to the receiver; and
a combination unit, for combining the redundancy data and the new data to form a transmission data to be subsequently transmitted to the receiver.

2. The transmission data generating apparatus according to claim 1, further comprising a combination ratio set unit, for setting a ratio relationship between the redundancy data and the new data.

3. A receiver, comprising:
a control information obtaining unit, for obtaining combination control information;
a redundancy data obtaining unit, for obtaining, from retransmitted data, a retransmission redundancy data which relates to primarily transmitted data, in accordance with the combination control information;
a data merging unit, for merging the retransmission redundancy data with the primarily transmitted data, to acquire merged primarily transmitted data; and
a decoding unit, for decoding the merged primarily transmitted data,
wherein the receiver further comprises a redundancy data processing unit, for obtaining, after the decoding unit has correctly decoded the merged primarily transmitted data, a correct redundancy data corresponding to the retransmission redundancy data, in accordance with the decoded correct primarily transmitted data, and for processing the correct redundancy data; and
wherein the data merging unit is further used for merging the processed correct redundancy data with the retransmitted data, to acquire merged retransmitted data; and the decoding unit further decodes the merged retransmitted data.

4. The receiver according to claim 3, wherein:
the decoding unit further decodes the retransmitted data when the decoding unit has not correctly decoded the merged primarily transmitted data;
the redundancy data processing unit is used for obtaining, after the decoding unit has correctly decoded the retransmitted data, correct retransmission redundancy data, in accordance with the decoded correct retransmitted data, and for processing the correct retransmission redundancy data;
the data merging unit merges the processed correct retransmission redundancy data with the primarily transmitted data, to reacquire the merged primarily transmitted data; and
the decoding unit decodes the merged primarily transmitted data as reobtained.

5. The receiver according to claim 3 or 4, wherein the redundancy data processing unit obtains the correct redundancy data in such a manner as to perform mother encoding on information data in the primarily transmitted data obtained via decoding, to acquire correct redundancy information, and then to obtain from the redundancy information a corresponding segment that corresponds to the retransmission redundancy data.

6. The receiver according to claim 3, 4 or 5, wherein the redundancy data processing unit so processes the correct redundancy data as to expand the value of the correct redundancy data to a corresponding large value in accordance with the value being positive or negative.

7. The receiver according to any of claims 3 to 6, wherein the retransmission redundancy data in the retransmitted data can be not completely identical with the redundancy data in the primarily transmitted data.

8. A receiver, comprising:
a control information obtaining unit, for obtaining combination control information;
a redundancy data obtaining unit, for obtaining, from retransmitted data, a retransmission redundancy data which relates to primarily transmitted data, in accordance with the combination control information; and
a decoding unit, for decoding the retransmitted data;
wherein the receiver further comprises a redundancy data processing unit, for obtaining, after the decoding unit has correctly decoded the retransmitted data, a correct redundancy data corresponding to the retransmission redundancy data in the retransmitted data, in accordance with the decoded correct retransmitted data, and for processing the retransmission redundancy data; and
a data merging unit, for merging the processed correct redundancy data with the primarily transmitted data, to acquire merged primarily transmitted data,
and wherein the decoding unit is further used to decode the merged primarily transmitted data.

9. The receiver according to claim 8 or 9, wherein:
when the decoding unit has not correctly decoded the retransmitted data, the data merging unit merges the retransmission redundancy data with the primarily transmitted data, to acquire merged primarily transmitted data;
the decoding unit decodes the merged primarily transmitted data;
the redundancy data processing unit is used for obtaining, after the decoding unit has correctly decoded the merged primarily transmitted data, a correct redundancy data corresponding to the retransmission redundancy data in the retransmitted data, in accordance with the decoded primarily transmitted data and based on the combination control information, and for processing the correct redundancy data corresponding to the retransmission redundancy data; and
the data merging unit is used for merging the processed correct redundancy data corresponding to the retransmission redundancy data with the retransmitted data, to acquire merged retransmitted data,
wherein the decoding unit is further used for decoding the merged retransmitted data.

10. The receiver according to claim 8, wherein the retransmission redundancy data in the retransmitted data can be not completely identical with the retransmitted data in the primarily transmitted data.

11. A method of receiving retransmission data, including: obtaining combination control information; obtaining check information corresponding to primarily transmitted data in retransmitted data, in accordance with the combination control information; merging the check information corresponding to the primarily transmitted data in the retransmitted data with the primarily transmitted data, to acquire the merged primarily transmitted data; and decoding the merged primarily transmitted data; wherein the method further including: obtaining, after the merged primarily transmitted data has been correctly decoded, correct redundancy data that corresponds to the check information corresponding to the primarily transmitted data in the retransmitted data, in accordance with the decoded correct primarily transmitted data; merging the correct redundancy data with the retransmitted data, to acquire the merged retransmitted data; and decoding the merged retransmitted data.

12. A method of receiving retransmission data, including: obtaining combination control information; obtaining check information corresponding to primarily transmitted data in retransmitted data, in accordance with the combination control information; decoding the retransmitted data; wherein the method further including: obtaining, after the retransmitted data has been correctly decoded, correct redundancy data that corresponds to the check information corresponding to the primarily transmitted data in the retransmitted data, in accordance with the decoded correct retransmitted data and based on the combination control information; merging the correct redundancy data with the primarily transmitted data, to acquire the merged primarily transmitted data; and decoding the merged primarily transmitted data.

13. A transmitter which comprises the transmission data generating apparatus according to any of the preceding transmission data generating apparatus claims.

14. The transmitter according to claim 13, further comprising a response receiving unit, for receiving information fed back from a receiver; and a retransmission determining unit, for determining an encoded data block to be retransmitted, in accordance with the information received by the response receiving unit; wherein the data combination unit processes according to the partial data to be retransmitted as determined by the retransmission determining unit, and preferably further including a format notifying unit, for notifying the receiver of combination control information.

15. A computer program which when executed on a computer carries out the method of any of the preceding method claims or which when downloaded onto a device, causes it to be become a transmission data generating apparatus, receiver or transmitter according to any of the preceding apparatus claims.
